# EUROPEAN PATENT APPLICATION

(11) **EP 4 173 490 A1**
(43) Date of publication of application: **03.05.2023**
(21) Application number: 21218110.1
(22) Date of filing: 29.12.2021
(51) Int. Cl.: A23G 1/32, A23G 1/40, A23G 1/42, A23G 1/44, A23G 1/46, A23G 3/36, A23G 3/38, A23G 3/42, A23G 3/44, A23G 3/46, A23L 33/19, A23L 33/20, A23L 33/125, A23L 33/17, A23L 33/18, C13K 3/00

(54) **A FUNCTIONAL FOOD INGREDIENT AND PRODUCTION METHOD THEREOF**

(30) Priority: 27.10.2021 TR 202116797
(71) Applicant: Eti Gida Sanayi Ve Ticaret Anonim Sirketi, 26110 Eskisehir (TR)
(72) Inventor: MARASLI, SERDAR, 26110 ESKISEHIR (TR); KOSKER, KUBRA, 26110 ESKISEHIR (TR)
(74) Representative: Kaya, Erdem

(57) **Abstract**

The invention is related to a functional food ingredient comprising invert sugar and protein to be used in high sugar-containing food products such as cream, chocolate, dragee, fruit-flavored sugar, etc., which provides reducing the use of sugar without affecting the perception of sweetness and reducing the amount of or eliminating natural or artificial sweeteners, and the production method of said food ingredient.

## Description

### TECHNICAL FIELD

The invention is related to a functional food ingredient comprising invert sugar and protein to be used in high sugar-containing food products such as cream, chocolate, dragee, fruit-flavored sugar, which provides reducing the amount of sugar used without affecting the perception of sweetness and reducing or eliminating natural or artificial sweeteners, and the production method thereof.

### PRIOR ART

Sugars are compounds that are mainly molecules of carbon, hydrogen and oxygen atoms. The simplest carbohydrates are referred to as monosaccharides or simple sugars. Examples thereof include glucose (grape sugar, blood sugar) and fructose (fruit sugar). The structure composed of a combination of two simple sugar molecules is referred to as disaccharides. Examples thereof include sucrose (beet sugar, white sugar).

In the commercial sense, sugar refers to liquid or solid products, pure or mixed, comprising simple sugars and/or higher sugars composed of combinations thereof. As commercial sugars; beet sugar, corn syrup, high fructose corn syrup (HFCS, fructose-glucose syrup, isoglucose, corn syrup), invert sugar syrup, maltose, dextrose may be used. The main function of sugars is to enhance flavor, aroma and certain textural properties to foods.

Many studies have been and are still being conducted regarding the use of commercial sugars in high amounts leading to multiple problems for human health. It is thought that consumption of sugar in high amounts causes heart diseases, obesity, diabetes and hepatic steatosis in the human body, especially. Therefore, several research and studies are carried out in the related technical field to reduce the amount of sugar used in food products.

In food products, the use of natural or artificial sweeteners to reduce the amount of high sugar consumption, or the use of filling materials to substitute the deficiency of dry matter are in question. It is possible to reduce the amount of sugar used without changing the perception of sweetness of the products by using the said sweetener and filling materials. However, due to the use of these materials as sugar substitutes, the sensory quality of the final confectionery products is negatively affected, and the production costs increase. Moreover, multiple studies have proven that sweeteners and filling materials have carcinogenic (Health Risks of Saccharin Revisited. Ellwein & Cohen. I. Stanford University, 1990) and toxic (Journal of Toxicology and Environmental Health Sciences Volume 6 Number 8, October 2014) effects for human health, cause diabetes (Jotham Suez et al., Artificial sweeteners induce glucose intolerance by altering the gut microbiota, september 2017) and their use for pregnant women ((*Soffritti*, *M.*, *Belpoggi*, *F.*, *Tibaldi*, *E.*, *Esposti*, *dd*, *Lauriola M. 2007;* 115 (9), 1293-1297)) is unfavourable.

Ingredients used instead of sugar to reduce sugar in food products include multiple natural and synthetic raw materials having different sweetness levels. Stevia, thaumatin, tagatose, inulin, monkfruit having a very high sweetness level are used as natural substitutes, and acesulfame K, aspartame, neohesperidine, saccharin and neotame as synthetic substitutes. Since the sweetness levels of these food ingredients are at least 100-fold of sugar, they may be used in smaller amounts, compared to sugar. Moreover, in addition to some of these food ingredients being difficult to supply and costly, it is not possible for them to fill the large mass resulting from the sugar being removed from the recipe alone. Therefore, such sweeteners are generally used in combination with other food ingredients such as polyols (maltitol, xylitol, isomalt, etc.) and saccharines. However, these fillers are known to be inadequate in meeting the above-mentioned functions of sugar - particularly texture and color development - and result in inadequate flavor development due to little or no participation in Maillard reactions. Moreover, these fillers affect the sensory quality of the product negatively and may leave a bad taste in the mouth, called aftertaste. There are also supply and cost problems with the said food ingredients.

The subject of the invention with patent number US2020370138 A1 is related to sugar-derived compositions and the production of the mentioned compositions. The main object of the present invention is to obtain amorphous sugars that may be the alternative to crystal sugars, and to produce products with a low glycemic index by using these sugars.

The invention with patent number WO2017093309 includes regulations for reducing the amount of sugar used in confectionery products. Accordingly, it is mentioned that the final product comprises at least one sugar, at least one bulking agent and at least one surfactant, and that said sugar described herein consists of porous particles with an amorphous structure. In the invention, it has been found that the amorphous porous sugar has higher sweetness than the crystal sugars when used in an equivalent amount, and thus, it is sufficient to use less amorphous porous sugar than the crystalline sugars for the same perception of sweetness.

As a result, it has become a necessity to make innovations in the technical field related to reducing the use of sugar, sweetener and filling materials, which are known to have multiple disadvantages in sugar-containing food products in the related technical field.

### BRIEF DESCRIPTION OF THE INVENTION

The present invention relates to a functional new food ingredient and the production of said food ingredient to eliminate the above-mentioned disadvantages and bring new advantages to the related technical field.

An object of the invention is to obtain a functional food ingredient comprising at least 60% sugar. By obtaining this food ingredient in powder form, the disadvantages of liquid sugar syrups, which are known to be difficult to store in liquid form and have limited storage times, may be eliminated.

An object of the invention is to obtain invert sugar with high efficiency, specifically with at least 98% efficiency, in which enzyme inversion processes are carried out, and to present a functional food ingredient comprising these invert sugars. With the inversion process of the invention, it is possible to obtain equivalent amounts of glucose and fructose sugar components.

An object of the invention is to present a functional food ingredient comprising invert sugar, which has high sweetness levels due to the presence of fructose and good texture properties due to the presence of glucose.

An object of the invention is to obtain a food ingredient comprising invert sugars with very small particle size. It is possible that the functional food ingredient comprising the invert sugars of the invention may be used as a raw material in confectionery products such as cream and chocolate, whose particle size is expected to be 30 microns or less.

An object of the invention is to obtain a functional food ingredient that contains protein between 10% to 40% by weight. Thus, the amount of protein may be high in food products comprising sugar, where this food ingredient is used as a raw material.

An object of the invention is to present a functional food ingredient comprising invert sugar and protein, which has the characteristics of participating in Maillard reactions and contribution to flavor development, due to the presence of reducing sugars such as glucose and fructose sugar and protein content.

An object of the invention is to provide a functional food ingredient comprising invert sugar and protein, which allows the filling materials or dry matter used to substitute the deficiency of synthetic sweeteners to be reduced or eliminated completely, due to their high level of sweetness. By this means, it is possible to obtain confectionery products that are more suitable for human health.

### DETAILED DESCRIPTION OF THE INVENTION

In this detailed description, the subject of the invention is a novel food ingredient comprising protein to be used in sugar-containing food products such as cream, chocolate, dragee, fruit-flavored sugar, etc., which provides reducing the amount of sugar used without affecting the perception of sweetness and reducing or eliminating natural or artificial sweeteners, and the production method for said functional food ingredient, and it is explained with non-limiting examples only for a better understanding of the subject.

The term "sucrose or white sugar" used as a raw material in the invention describes the crystalline substances traditionally obtained from plants, especially sugar cane and beet, and used as a sweetener in food and beverages.

In the invention, the term "invert sugar syrup" is described as the liquid product obtained by releasing monosaccharides as a result of hydrolysis of sucrose with acids or enzymes.

The subject of the invention, the production of functional food ingredient comprising invert sugar and protein, is for eliminating all the disadvantages encountered in the current technique, and it mainly consists of two process steps. The said steps are; a) performing inversion processes of white sugar with high efficiency and obtaining invert syrup as a result of this process, b) subjecting the invert syrup obtained to drying processes in a spray dryer, and obtaining a functional new food ingredient comprising protein, having a maximum particle size of 30 microns.

The innovative aspect of the food ingredient of the invention is that it contains invert sugars obtained by performing inversion processes with at least 98% efficiency. Said inversion process is carried out using at least one enzyme: This enzyme, called invertase, provides the inversion of white sugar or sucrose, which is the raw material of confectionery products, i.e., separation to its components as glucose and fructose.

Herein, the expression "with at least 98% efficiency" means that the sucrose solution is converted to glucose and fructose components in at least 98% ratio as a result of inversion reactions in the presence of enzymes. In other words, it refers to the efficiency of the reaction.

In the present art, sucrose is generally inverted with various acids to obtain invert sugar. In inversion processes with acids, there are disadvantages such as the use of acid, high reaction temperature and accordingly, increase in energy requirement and costs, the difficulty of reaction control and low inversion efficiency, and the negative effect on flavor due to the irritating feature of acids. Due to acids being used in inversion processes, and the resulting low inversion efficiency, lower rates of fructose may be obtained. This causes failure in achieving the desired levels in the sweetness level of the invert sugar, which is intended to substitute white sugar. In order to eliminate these disadvantages, invertase enzymes are used in the inversion processes of sucrose to obtain the functional new food ingredient of the invention.

### Invertase Enzyme and Inversion Process

The invertase enzyme used in the invention is for breaking the bonds within the sucrose and converting sucrose into a glucose-fructose mixture. It is obtained from S. *cerevisiae* cultures. The use temperature of this enzyme is between 50 and 65 °C, and its pH values are between 4-6. The details of the inversion process are given in Table 1.

**Table 1. Inversion Process Parameters**

| **Process Parameter** | **Parameter Value** |
|---|---|
| Sucrose Solution | 60%-75% |
| Amount of Invertase Enzyme | 2-8 mL/kg |
| Process Time | 12-36 hours |
| Process Temperature | 50-65 °C |
| Ambient pH Value | 4-6 |

As a result of the inversion process of the sucrose solution with the values indicated in Table 1, glucose between 45% and 55% by weight and fructose between 45% and 55% by weight are formed.

As a result of the inversion processes of the invention performed with invertase enzymes, invert sugar in liquid form (which may be called syrup to express that it is liquid) is obtained. Invert syrup may be used frequently in products such as various confectionery, pastry and bakery products. However, for using invert sugars as a substitute for sucrose in confectionery products such as chocolate and cream, it is required to be obtained in solid form.

The subject of the invention allows the use of invert sugars as a substitute in confectionery products where sucrose is used as a raw material. The innovative aspect of the invention is that it comprises arrangements for bringing invert sugar into powder form. The most important of these arrangements is to atomize the invert syrup obtained from the inversion processes with at least 98% efficiency, with whey or its derivatives, and to obtain a functional new food ingredient comprising at least 60% sugar and maximum 40% protein.

### Application of Spray Drying Process

In this process step, the invert syrup obtained from the inversion process with at least 98% efficiency is turned into solid particles. In the invention, spray dryers are used to perform these processes. Spray drying process is obtaining the product in powder form as a result of spraying liquid samples or mixtures into a hot air environment and evaporating the liquids. The product obtained from this process is solid particles and granules with small particle size. If preferred, vacuum may be added to the spray dryer, and by virtue of this element, the process may be carried out at lower temperatures.

The following process steps are mainly carried out in the said spray dryer; (1) droplet formation by atomization of the feed, (2) contact of droplets with hot drying air, (3) moisture removal from droplets, (4) separation of the powder product from the air stream.

As the first feed to the spray device, the invert syrup previously obtained in the invention by performing inversion processes with at least 98% efficiency is added.

For obtaining functional food ingredient in powder form, whey or its derivatives (whey isolate, whey concentrate, etc.) comprising invert sugars which increase the glass transition temperature and hold the components together, are added to the said feed solution, with invert syrups. At this stage, preferably at least one drying agent may be added to the whey or its derivatives. At least one of powdered milk, gum arabic, guar gum, maltodextrin, starch, dietary fiber group, or their mixtures at certain ratios by weight may be preferred as drying agents.

In the invention, whey or its derivatives are used as a drying agent. In the invention, the "glass transition temperature" (which may be represented as Tg) is referred to as the temperature at which an amorphous solid softens when heated or becomes brittle when cooled, as known in the art. A variety of techniques may be used to measure the glass transition temperature, and any available or suitable technique including differential scanning calorimetry (DSC) and dynamic mechanical thermal analysis (DMTA) may be used.

In the possible embodiment of the invention, protease enzymes are added to perform protein hydrolysis for the breakdown and denaturing of proteins in whey or its derivatives and preventing agglomeration in the confectionery product. Protease is essential in obtaining the functional food ingredient of the invention. That is because protein may cause problems in the process of particularly oil-based confectionery products where functional ingredient will be used. If the functional food ingredient of the invention is to be used in bakery products, there is no need to use protease in the drying phase.

In the invention, addition of emulsifiers or surfactants to the feed solution for perfecting the spray drying process may be in question. If preferred, the emulsifier may be selected from sucrose monopalmitate, sucrose monolaurate, sucrose distearate, sorbitan monooleate, sorbitan monostearate, sorbitan monopalmitate, sorbitan monolaurate, sorbitan tristearate, PGPR, PGE, lecithin, PGPR, GMS, and any combination thereof.

In the spray dryer, the invert syrup, whey or derivatives, protease enzyme and preferably emulsifier that are added to the feed are brought into contact with the gas. Herein, carbon dioxide, nitrogen, air, argon or nitrogen may be used as gas. Preferably, air is used as the gas. In the studies conducted, in order for the products with high sugar content to be dried without sticking problems in spray dryers, the air outlet temperature value should be maximum 20°C above the glass transition temperature value of the product. This temperature is called the adhesion temperature (Bhandari and Hartel, 2005).

The functional food ingredient obtained by the completion of the drying processes in the spray dryer comprises at least 60% sugar by weight in micron size in powder form and at most 40% protein. Said particle size distribution is preferably between 10 to 30 microns. It is possible to use the functional food ingredient with these particle sizes, comprising invert sugar and protein, in confectionery products such as chocolate and cream, where the particle size of the sugar raw material is required to be 30 microns or less in the relevant technical field. In this way, lesser amounts of sugar may be used at equal perception of sweetness. The rheological problems caused by the low amount of sugar used in confectionery products can be solved by use of the protease enzyme.

In the invention, invert sugar is obtained with at least 98% efficiency of the inversion processes, wherein 1 mole of sucrose is obtained from 1 mole of glucose and 1 mole of fructose. As is known in the art, 1 mole of fructose has a higher perception of sweetness than 1 mole of sucrose, which is the main raw material. Therefore, the fructose and glucose mixture obtained from inversion processes is sweeter than the main raw material. Since the perception of sweetness of invert sugar in equivalent amounts is higher than that of sucrose, less sugar is used in confectionery products without changing the perception of sweetness. As a consequence, with the use of functional food ingredient comprising invert sugar and protein of the invention in confectionery products such as chocolate and cream, there is less addition of sucrose at equivalent perception of sweetness. By this means, it is possible to obtain confectionery products with the same perception of sweetness but reduced sugar use amounts. In this context, while it is a logical solution to use this functional food ingredient comprising invert sugar and protein in order to reduce the amount of sugar used in confectionery products, the use of artificial and natural sweeteners and filling materials that reduce the amount of sugar consumption can be eliminated. Through this, it is possible to obtain confectionery products that are more natural in structure and not harmful to human health.

With the functional food ingredient containing sugar and protein of the invention, both a product with small particle size compared to sugar and a porous product may be obtained. By this means, a product with a lower density than sugar may be obtained, and it has the feature of increasing sweetness when dissolved in the taste organ of the consumer. The functional food ingredient of the invention differs from the fructose in the present art due to these features.

As described earlier, it is ensured that sweeteners such as stevia, thaumatin, tagatose, inulin, monkfruit, acesulfame K, aspartame, neohesperidine, saccharine, neotame, polyols (maltitol, xylitol, isomalt etc.) and saccharines, which are frequently used in confectionery products and harmful to human health, causing rheological problems and increase production costs in confectionery products, are not used.

In the invention, enzymes are used as inversion catalyst in the production of invert sugar. Inversion processes with enzymes are not processes that are performed at high temperatures. Moreover, as a result of these processes, no HMF compound causing negative effects on health is formed as a by-product, or it is below the limit of 40 mg/kg. At the end of the inversion, no pollution or foreign matter is formed, and a pure product is obtained. Since the reaction takes place with the enzyme, it can be controlled and can be started and stopped according to the desired result.

The functional food ingredient of the invention also contains protein between 1 0% to 40% by weight. Thus, the amount of protein can be high in sugar-containing food products for which functional food ingredient is used as raw material. The food ingredient of the invention essentially reduces the amount of sugar in the final product, while increasing the protein ratio, and the new food ingredient gains functional properties.

The scope of protection of the invention is described in the attached claims and cannot be limited to the exemplary account given in this detailed description. After all, it is clear that a person skilled in the art may present similar embodiments in the light of the foregoing description without departing from the main concept of the invention.

## Claims

1. The invention is related to the production of a functional food ingredient comprising invert sugar and protein to be used in sugar-containing food products such as cream, chocolate, dragee, fruit-flavored sugar, **characterized in that** the production of functional food ingredient comprising invert sugar and protein comprises the steps of:
a) subjecting white sugar to inversion reactions with invertase enzymes with an efficiency of at least 98% and obtaining invert sugar syrup containing mixtures of fructose and glucose in equal amounts,
b) subjecting the obtained invert sugar syrup to spray drying in a spray dryer with protease enzymes used for breaking down whey or its derivatives, which are used as drying agents in order to increase the glass transition temperature together with invert sugar syrups and to hold the components together, and the proteins contained in whey or its derivatives; and for preventing the agglomeration in the sugar-containing food product, and obtaining food ingredient containing invert sugar and protein with particle sizes in the range of 10 to 30 microns,
wherein the food ingredient obtained contains invert sugar of at least 60% by weight and protein between 10% to 40% by weight.

2. The production method according to Claim 1, **characterized in that** invertase enzyme added in the said process a) is added between the values of 2 to 8 mL/kg.

3. The production method according to Claims 1 or 2, **characterized in that** the inversion process of the process step a) is carried out at a process temperature between 50 to 65 °C.

4. The production method according to one of the Claims 1-3, **characterized in that** process time of the inversion process of the process step a) is between 12 to 36 hours.

5. The production method according to one of the Claims 1-4, **characterized in that** the process pH value of the inversion process of the process step a) is between 4-6.

6. The production method according to one of the Claims 1-5, **characterized in that** it contains at least one of , powdered milk, gum arabic, guar gum, maltodextrin, starch, dietary fiber group, as well as whey or its derivatives, or their mixtures at certain ratios by weight, as the drying agent mentioned in the process step b).

7. The production method according to one of the claims 1-6, **characterized in that** before starting the said b) spray drying operations, the following is added to the feed solution of the spray dryer;
• invert sugar syrup,
• whey or its derivatives, which prevent the adhesion of invert sugar to the equipment walls during drying due to its low glass transition temperature,
• protease enzymes for breaking down the proteins in whey or its derivatives and for preventing agglomeration in the sugar-containing food product,
• and/or emulsifier used to ensure the mixing of immiscible materials
• and/or surfactant.

8. The production method according to Claim 7, **characterized in that** said emulsifier is one of sucrose monopalmitate; sucrose monolaurate, sucrose distearate, sorbitan monooleate, sorbitan monostearate, sorbitan monopalmitate, sorbitan monolaurate, sorbitan tristearate, PGPR, PGE, lecithin, PGPR, GMS, and any combination thereof.

9. A functional food ingredient comprising invert sugar and protein, having particle sizes of 30 microns or less and obtained by a production method according to one of the Claims 1-8.

10. A functional food ingredient comprising invert sugar and protein according to Claim 9, containing an equivalent amount of fructose and glucose compounds.

11. The use of invert sugar according to one of the Claims 9-10 as sugar raw material in confectionery products such as cream, chocolate, dragee, fruit flavored candy, etc.
